# EUROPEAN PATENT SPECIFICATION

(11) **EP 2 890 124 B1**
(45) Date of publication and mention of the grant of the patent: **13.12.2017**
(21) Application number: 13801432.9
(22) Date of filing: 12.07.2013
(51) Int. Cl.: H04N 13/00, H04N 19/176, H04N 19/11, H04N 19/14, H04N 19/157, H04N 19/597

(54) **CODING METHOD AND DEVICE APPLIED TO HEVC-BASED 3DVC**
CODIERUNGSVERFAHREN UND -VORRICHTUNG FÜR 3DVC AUF HEVC-BASIS
PROCÉDÉ ET DISPOSITIF DE CODAGE APPLIQUÉ AU CODAGE 3DVC BASÉ SUR HEVC

(30) Priority: 28.09.2012 CN 201210370396
(43) Date of publication of application: 01.07.2015
(73) Proprietor: ZTE Corporation, Shenzhen, Guangdong 518057 (CN)
(72) Inventor: LI, Hongwei, Shenzhen Guangdong 518057 (CN); LI, Ming, Shenzhen Guangdong 518057 (CN); HONG, Yingjie, Shenzhen Guangdong 518057 (CN); SHANG, Guoqiang, Shenzhen Guangdong 518057 (CN)
(74) Representative: De Bortoli, Tiziano
(86) International application number: PCT/CN2013/079300
(87) International publication number: WO 2013/182124

(56) References cited:
- CN-A- 102 447 907
- CN-A- 102 595 140
- CN-A- 102 665 079
- US-A1- 2012 128 067
- US-A1- 2012 182 388
- ZHAO X ET AL: "3D-CE6.h related: Depth Modeling Mode (DMM) 3 simplification for HTM", 1. JCT-3V MEETING; 101. MPEG MEETING; 16-7-2012 - 20-7-2012; STOCKHOLM; (THE JOINT COLLABORATIVE TEAM ON 3D VIDEO CODING EXTENSION DEVELOPMENT OF ISO/IEC JTC1/SC29/WG11 AND ITU-T SG.16 ); URL: HTTP://PHENIX.INT-EVRY.FR/JCT2/,, no. JCT3V-A0098, 11 July 2012 (2012-07-11) , XP030130097,
- ANONYMOUS: "3D-HEVC Test Model 1", 101. MPEG MEETING;16-7-2012 - 20-7-2012; STOCKHOLM; (MOTION PICTURE EXPERT GROUP OR ISO/IEC JTC1/SC29/WG11),, no. N12937, 17 January 2013 (2013-01-17), XP030019409,

## Description

### Technical Field

The present invention relates to a technique of video compression coding, and particularly, to a coding method and device for High Efficiency Video Coding based three-dimensional Video Coding (HEVC-based 3DVC).

### Background of the Related Art

In an HEVC-based 3DVC video coding standard that is being established, an intra mode of High Efficiency Video Coding (HEVC) and a Depth Modeling Modes (DMM) prediction are adopted in prediction of a depth image. The intra mode of the HEVC is mainly used for prediction coding of non-boundary regions, and the DMM prediction is mainly used for prediction coding of boundary regions. The intra mode of the HEVC supports block division in 5 sizes, which respectively defines 17 prediction modes for 4x4 block, 35 prediction modes for 8x8 block, 35 prediction modes for 16x16 block, 35 prediction modes for 32x32 block and 3 prediction modes for 64x64 block. The DMM divides a block into 2 areas according to two ways: Wedgelets and Contours, and it defines 4 prediction modes from mode 1 to mode 4. Wherein, in the mode 1, a start point and a final point of an area division line are directly searched and determined in an exhaustion way, and a direction of a Wedgelets division straight line of the current block is obtained. In the mode 2, a direction of a left or top adjacent depth block or an intra-direction is taken as reference to obtain the direction of the Wedgelets division straight line of the current block. In the mode 3 and mode 4, the division of the current depth block is determined respectively according to the Wedgelets and the Contours of a common located video image block corresponding to the current depth block.

When a Coding Unit (CU) of the depth image is coded, a coder evaluates the intra mode modes of the HEVC and the 4 prediction modes of the DMM with respect to a parent Prediction Unit (PU) corresponding to the CU. After obtaining costs of each prediction mode, a mode with the minimum cost is adopted as an optimal prediction mode of the parent PU according to a Rate Distortion Optimization (RDO) model, and a sub PU is coded through the mode. The final cost of the CU corresponding to the parent PU is eventually obtained, so as to determine the hierarchical division of the CU.

It can be discovered that, since excessive invalid prediction modes are evaluated in coding the depth image and a complexity of the DMM is extremely high, an overlong coding time of the HEVC-based 3DVC is caused.

The document "JCT2-A0098 3D-CE6.h related: Depth Modeling Mode (DMM) 3 simplification for HTM" discloses a method to simplify Depth Modeling Mode (DMM) 3 in HTM.

The document US 20120182388 A1 discloses an apparatus and method for processing a depth image. A compressed depth image may be divided into a plurality of regions, and may be processed.

### Summary of the Invention

The example of the present invention provides a coding method and device applied to HEVC-based 3DVC, which increasing a coding speed of the HEVC-based 3DVC.

In order to solve the above problem, the example of the present invention provides a coding method applied to high efficiency video coding based three-dimensional video coding (HEVC-based 3DVC), which comprises:
in the HEVC-based 3DVC, before a parent prediction unit (PU) corresponding to a coding unit (CU) of a depth image is predicted, judging whether the parent PU meets a preset condition, if the parent PU meets the preset condition, evaluating only traditional intra modes of high efficiency video coding (HEVC) when the parent PU is coded,, and if the parent PU does not meet the preset condition, evaluating the traditional intra modes of the HEVC and depth modeling modes (DMM) predictions when the parent PU is coded.

The above method can be further characterized in that, the step of judging whether the parent PU meets a preset condition comprises:
if one or a combination of the following conditions is met, the parent PU meeting the preset condition, and if one or a combination of the following conditions is not met, the parent PU not meeting the preset condition:
   a block size of the parent PU is greater than a first threshold value;
   a difference between a maximum pixel value and a minimum pixel value of the parent PU is less than a second threshold value; and
   all rows and columns of the parent PU are evaluated, if a number of pixels whose pixel values are same is greater than a third threshold value in a row or column, the row or column is recorded as a specific row or column, the pixel values with the number of pixels greater than the third threshold value are recorded as specific pixels, and all the specific pixels of the parent PU are identical.

The above method can be further characterized in that, the third threshold value is relevant to the block size of the parent PU.

The above method can be further characterized in that, the method further comprises: after the traditional intra modes of the HEVC are evaluated, or after the traditional intra modes of the HEVC and the DMM predictions are evaluated, acquiring an optimal prediction mode of the parent PU, obtaining an optimal cost and a prediction mode of the parent PU, and taking the optimal cost and the prediction mode of the parent PU as a cost and a prediction mode of the CU.

The example of the present invention further provides a coding device applied to high efficiency video coding based three-dimensional video coding (HEVC-based 3DVC), which comprises: a judgment module and a prediction module, wherein:
the judgment module is configured to: in the HEVC-based 3DVC, before a parent prediction unit (PU) corresponding to a coding unit (CU) of a depth image is predicted, judge whether the parent PU meets a preset condition, and send a judgment result to the prediction module; and
the prediction module is configured to: if the parent PU meets the preset condition, evaluate only traditional intra modes of high efficiency video coding (HEVC) when the parent PU is coded, and if the parent PU does not meet the preset condition, evaluate the traditional intra modes of the HEVC and depth modeling modes (DMM) predictions when the parent PU is coded.

The above device can be further characterized in that, the judgment module judges whether the parent PU meets the preset condition in the following way:
if one or a combination of the following conditions is met, the parent PU meeting the preset condition, and if one or a combination of the following conditions is not met, the parent PU not meeting the preset condition:
   a block size of the parent PU is greater than a first threshold value;
   a difference between a maximum pixel value and a minimum pixel value of the parent PU is less than a second threshold value; and
   all rows and columns of the parent PU are evaluated, if a number of pixels whose pixel values are same is greater than a third threshold value in a row or column, the row or column is recorded as a specific row or column, the pixel values with the number of pixels greater than the third threshold value are recorded as specific pixels, and all the specific pixels of the parent PU are identical.

The above device can be further characterized in that, the third threshold value is relevant to the block size of the parent PU.

The above device can be further characterized in that, the prediction module is further configured to: after the traditional intra modes of the HEVC are evaluated, or after the traditional intra modes of the HEVC and the DMM predictions are evaluated, acquire an optimal prediction mode of the parent PU, obtain an optimal cost and a prediction mode of the parent PU, and take the optimal cost and the prediction mode of the parent PU as a cost and a prediction mode of the CU.

With the coding method and device applied to the HEVC-based 3DVC provided in the example of the present invention, by reducing the evaluated prediction modes, a coding speed of the HEVC-based 3DVC is increased.

### Brief Description of Drawings

The examples or accompanying drawings required to be used in the descriptions of the related art will be simply introduced below. The accompanying drawings in the following descriptions are a plurality of examples of the present invention, and for the ordinary skilled in the art, in a premise of not contributing creative labor, other accompanying drawings also can be obtained according these accompanying drawings.
FIG. 1 is a logical flow diagram of a coding method according to contents of the example of the present invention.
FIG. 2 is a flow diagram of a coding method according to the example 1 of the present invention.
FIG. 3 is a block diagram of a coding device according to the example of the present invention.

### Preferred Embodiments of the Invention

The examples of the present invention will be described in detail in combination with the accompanying drawings below. It should be noted that the examples in the present invention and the characteristics in the examples can be optionally combined with each other in the condition of no conflict.

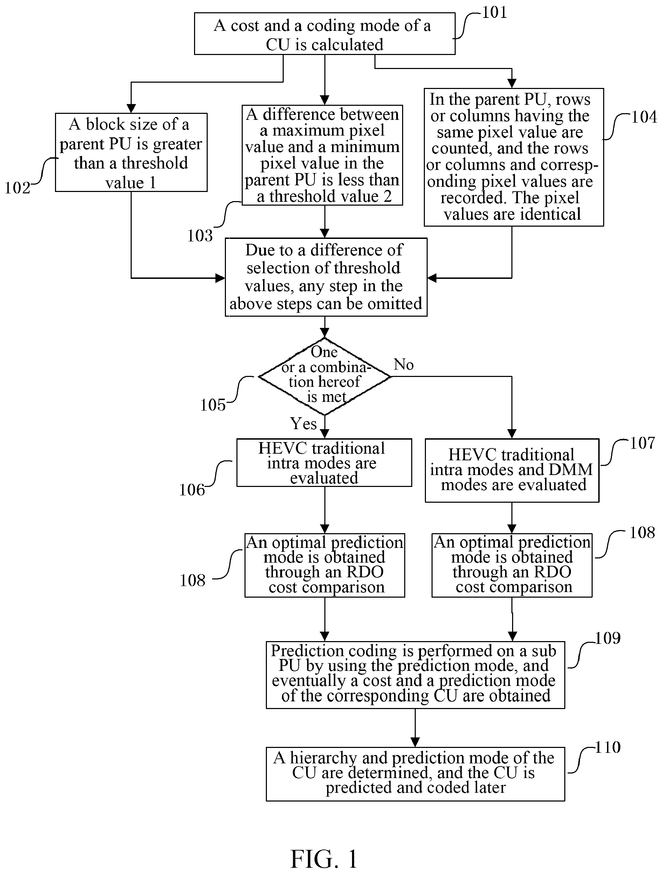

In order to increase a coding speed of the HEVC-based 3DVC to the greatest extent in the condition of guaranteeing a small coding quality loss, the example of the present invention provides a coding method and device applied to the HEVC-based 3DVC, and the technical scheme of the contents of the example of the present invention will be described clearly and completely in combination with the accompanying drawings of the contents of the example of the present invention below. As shown in FIG. 1, the following steps are included.

In step 101, in a process of an HEVC-based 3DVC coder coding a CU of a depth image, selection of CU cost and coding mode is performed, and in order to select the CU cost and coding mode more reasonably, it is to judge whether a parent PU corresponding to the CU meets one or a combination of the following steps.

In step 102, a block size of the parent PU is greater than the first threshold value 1.

In step 103, in the parent PU, a difference between a maximum pixel value and a minimum pixel value is less than the second threshold value 2.

In step 104, in the parent PU, all rows and columns are evaluated. In a certain row or column, if the number of pixels whose pixel values are same is greater than the third threshold value 3, it is called that the row or column has the same pixel value, the row and column is recorded as a specific row or column, and the pixel value with the number of pixels greater than the third threshold value 3 is recorded as a specific pixel, and all specific pixel values of the parent PU are identical.

In step 105, when one or more than one of the above steps is met, step 106 is executed, and if not, step 107 is executed.

In step 106, when the parent PU is coded, only traditional intra modes of the HEVC are evaluated.

In step 107, when the parent PU is coded, the traditional intra modes of the HEVC and DMM predictions are evaluated simultaneously.

In step 108, an optimal prediction mode of the parent PU is then obtained through an RDO model.

In step 109, prediction coding is performed on a sub PU by using the prediction mode, and eventually an obtained optimal cost and a prediction mode of the parent PU are taken as the cost and prediction mode of the CU corresponding to the parent PU.

In step 110, a hierarchy and prediction mode of the CU are determined through the cost of each CU. And according to the prediction mode obtained in the step 109, the CU is predicted and coded later.

With regard to the third threshold value, it can be relevant to a block size of the parent PU. For example, different the third threshold values can be set according to different block sizes of the parent PU. Certainly, the same third threshold value can also be set.

Only one or more than one of the above steps 102 to 104 can be executed, which is not limited.

The implementation method of the coder in the following examples is only one of possible implementation methods of the coder in the example.

### Example 1

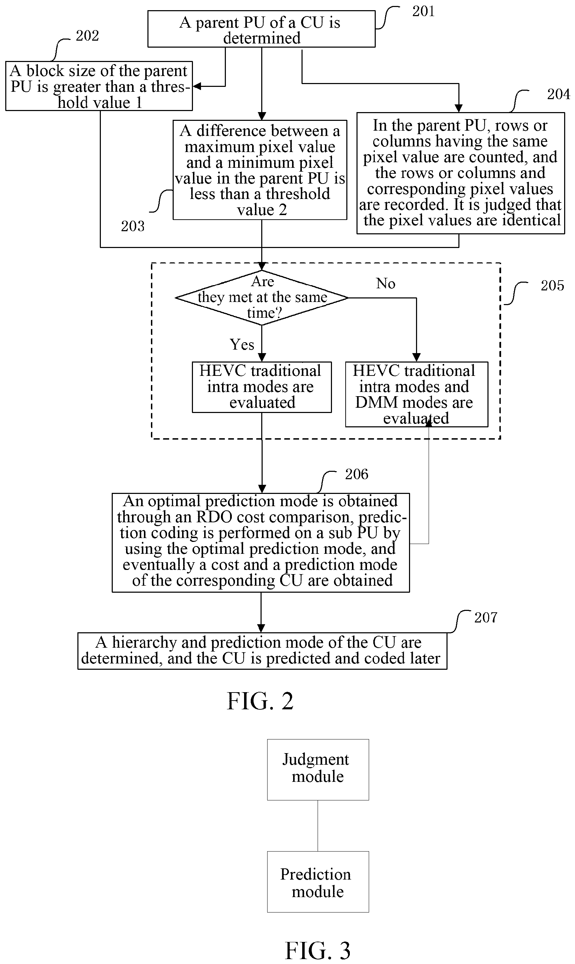

A logical flow of the coding method of the example is as shown in FIG. 2, and the following steps are included.

In step 201, when a depth image of HEVC-3DV is coded, a parent PU of a CU is determined, and it is to judge whether the parent PU corresponding to the CU meets one or a combination of the following steps.

In step 202, a block size of the parent PU is greater than the first threshold value 1.

In step 203, a difference between a maximum pixel value and a minimum pixel value set in the parent PU is less than the second threshold value 2.

In step 204, in the parent PU, all rows and columns are evaluated. In a certain row or column, if the number of pixels whose pixel values are the same is greater than the third threshold value 3, it is called that the row or column has the same pixel value. The row or column and corresponding pixel values are recorded. It is to judge whether the recorded pixel values are identical. With regard to the third threshold value 3, different values can be set according to different block sizes.

In step 205, if the above steps are met, when the parent PU is coded, only traditional intra modes of the HEVC are evaluated; and if the above steps are not met, when the parent PU is coded, the traditional intra modes of the HEVC and DMM predictions are evaluated simultaneously.

In step 206, an optimal prediction mode of the parent PU is found through an RDO model, and prediction coding is performed on a sub PU by using the prediction mode. Eventually an obtained optimal cost and a prediction mode of the parent PU are taken as a cost and a prediction mode of the CU corresponding to the parent PU.

In step 207, a hierarchy and prediction mode of the CU are determined through the cost of each CU. And according to the prediction mode obtained in the step 206, the CU is predicted and coded later.

### Example 2

The example provides a coding device.

The coding device can code three-dimensional video signals with the implementation method of the coder in the foregoing example and output a code stream.

As shown in FIG. 3, the coding device includes: a judgment module 301 and a prediction module 302, wherein:
the judgment module is configured to: in the high efficiency video coding based three-dimensional video coding HEVC-based 3DVC, before a parent prediction unit PU corresponding to a coding unit CU of a depth image is predicted, judge whether the parent PU meets a preset condition, and send a judgment result to the prediction module; and
the prediction module is configured to: evaluate only traditional intra modes of high efficiency video coding HEVC when the parent PU is coded, and if the parent PU does not meet the preset condition, evaluate the traditional intra modes of the HEVC and depth modeling modes DMM predictions when the parent PU is coded.

Wherein, the judgment module judging whether the parent PU meets the preset condition includes:
if one or a combination of the following conditions is met, the parent PU meeting the preset condition, and if one or a combination of the following conditions is not met, the parent PU not meeting the preset condition:
   Condition 1: a block size of the parent PU is greater than a first threshold value 1;
   Condition 2: a difference between a maximum pixel value and a minimum pixel value of the parent PU is less than a second threshold value 2; and
   Condition 3: all rows and columns of the parent PU are evaluated, if the number of pixels whose pixel values are the same is greater than the third threshold value in a row or column, the row or column is recorded as a specific row or column, the pixel values with the number of pixels greater than the third threshold value are recorded as specific pixels, and all the specific pixels of the parent PU are identical.

Wherein, the third threshold value is relevant to the block size of the parent PU.

Wherein, the prediction module is further configured to: after the traditional intra modes of the HEVC are evaluated, or after the traditional intra modes of the HEVC and the DMM predictions are evaluated, acquire an optimal prediction mode of the parent PU, obtain an optimal cost and a prediction mode of the parent PU, and take the optimal cost and the prediction mode of the parent PU as a cost and a prediction mode of the CU.

The coding device of the example can be relevant devices for generating code streams in the video communication application, such as a mobile phone, a computer, a server, a portable mobile terminal, a digital camera, and a television broadcasting system device and so on.

The ordinary person skilled in the art can understand that all or part of the steps in the above method can be completed by a program instructing related hardware, and the program can be stored in a computer readable memory medium, such as a read-only memory, disk or optical disk and so on. Alternatively, all or part of the steps of the above examples also can be implemented by using one or multiple integrated circuits. Correspondingly, each module/unit in the above examples can be implemented in a form of hardware, and also can be implemented in a form of software function module. The example of the present invention is not limited to any combination of hardware and software in a specific form.

### Industrial Applicability

With the coding method and device applied to the HEVC-based 3DVC provided in the example of the present invention, by reducing the evaluated prediction modes, a coding speed of the HEVC-based 3DVC is increased.

## Claims

1. A coding method applied to high efficiency video coding based three-dimensional video coding (HEVC-based 3DVC), comprising:
in the HEVC-based 3DVC, before a parent prediction unit (PU) corresponding to a coding unit (CU) of a depth image is predicted (201), judging whether the parent PU meets all preset conditions, if the parent PU meets all the preset conditions, then evaluating only intra modes of high efficiency video coding (HEVC) when the parent PU is coded, else evaluating the intra modes of the HEVC and depth modeling modes (DMM) when the parent PU is coded (205); wherein the preset conditions are as follows:
a block size of the parent PU is greater than a first threshold value (202);
a difference between a maximum pixel value and a minimum pixel value of the parent PU is less than a second threshold value (203); and
all specific pixels of the parent PU are identical (204); wherein the specific pixels are obtained in the following way:
all rows and columns of the parent PU are evaluated, if the number of pixels whose pixel values are the same is greater than a third threshold value in a row or column, the row or column is recorded as a specific row or column, the pixel values with the number of pixels greater than the third threshold value are recorded as specific pixels, wherein, the third threshold value is dependent on a block size of the parent PU.

2. The method according to claim 1, wherein, the method further comprises: after the intra modes of the HEVC are evaluated, or after the intra modes of the HEVC and the DMM predictions are evaluated, acquiring an optimal prediction mode of the parent PU, obtaining an optimal cost and a prediction mode of the parent PU, and taking the optimal cost and the prediction mode of the parent PU as a cost and a prediction mode of the CU (206).

3. A coding device applied to high efficiency video coding based three-dimensional video coding (HEVC-based 3DVC), comprising: a judgment module (301) and a prediction module (302), wherein:
the judgment module (301) is configured to: in the HEVC-based 3DVC, before a parent prediction unit (PU) corresponding to a coding unit (CU) of a depth image is predicted, judge whether the parent PU meets all preset conditions, and send a judgment result to the prediction module; and
the prediction module (302) is configured to: if the parent PU meets all the preset conditions, then evaluate only intra modes of high efficiency video coding (HEVC) when the parent PU is coded, else evaluate the intra modes of the HEVC and depth modeling modes (DMM) predictions when the parent PU is coded; wherein the preset conditions are as follows:
a block size of the parent PU is greater than a first threshold value;
a difference between a maximum pixel value and a minimum pixel value of the PU is less than a second threshold value; and
all specific pixels of the parent PU are identical; wherein the specific pixels are obtained in the following way:
all rows and columns of the parent PU are evaluated, if the number of pixels whose pixel values are the same is greater than a third threshold value in a row or column, the row or column is recorded as a specific row or column, the pixel values with the number of pixels greater than the third threshold value are recorded as the specific pixels, wherein, the third threshold value is dependent on a block size of the parent PU.

4. The device according to claim 3, wherein, the prediction module is further configured to: after the intra modes of the HEVC are evaluated, or after the intra modes of the HEVC and the DMM predictions are evaluated, acquire an optimal prediction mode of the parent PU, obtain an optimal cost and a prediction mode of the parent PU, and take the optimal cost and the prediction mode of the parent PU as a cost and a prediction mode of the CU.

## Patentansprüche

1. Codierungsverfahren, das auf eine auf hocheffizienter Videocodierung beruhende dreidimensionale Videocodierung (auf HEVC beruhende 3DVC) angewendet wird, wobei das Verfahren umfasst, dass:
bevor in der auf HEVC beruhenden 3DVC eine Vorgänger-Vorhersageeinheit (PU), die einer Codierungseinheit (CU) eines Tiefenbilds entspricht, vorhergesagt wird (201), beurteilt wird, ob die Vorgänger-PU alle vorgegebenen Bedingungen erfüllt, dann, wenn die Vorgänger-PU alle vorgegebenen Bedingungen erfüllt, nur interne Modi der hocheffizienten Videocodierung (HEVC) ausgewertet werden, wenn die Vorgänger-PU codiert wird, ansonsten die internen Modi der HEVC und Tiefenmodellierungsmodi (DMM) ausgewertet werden, wenn die Vorgänger-PU codiert wird (205); wobei die vorgegebenen Bedingungen wie folgt sind:
eine Blockgröße der Vorgänger-PU ist größer als ein erster Schwellenwert (202);
eine Differenz zwischen einem maximalen Pixelwert und einem minimalen Pixelwert der Vorgänger-PU ist kleiner als ein zweiter Schwellenwert (203); und
alle speziellen Pixel der Vorgänger-PU sind identisch (204); wobei die speziellen Pixel auf die folgende Weise erhalten werden:
alle Zeilen und Spalten der Vorgänger-PU werden ausgewertet, wenn die Anzahl der Pixel, deren Pixelwerte gleich sind, in einer Zeile oder in einer Spalte größer als ein dritter Schwellenwert ist, wird die Zeile oder Spalte als eine spezielle Zeile oder Spalte aufgezeichnet, die Pixelwerte, deren Anzahl der Pixel größer als der dritte Schwellenwert ist, werden als spezielle Pixel aufgezeichnet, wobei der dritte Schwellenwert von einer Blockgröße der Vorgänger-PU abhängt.

2. Verfahren nach Anspruch 1, wobei das Verfahren ferner umfasst, dass:
nach dem Auswerten der internen Modi der HEVC oder nach dem Auswerten der internen Modi der HEVC und der DMM-Vorhersagen ein optimaler Vorhersagemodus der Vorgänger-PU beschafft wird, optimale Kosten und ein Vorhersagemodus der Vorgänger-PU erhalten werden und die optimalen Kosten und der Vorhersagemodus der Vorgänger-PU als Kosten und Vorhersagemodus der CU verwendet werden (206).

3. Codierungsvorrichtung, die auf eine auf hocheffizienter Videocodierung beruhende dreidimensionale Videocodierung (auf HEVC beruhende 3DVC) angewendet wird, umfassend: ein Beurteilungsmodul (301) und ein Vorhersagemodul (302), wobei:
das Beurteilungsmodul (301) ausgestaltet ist, um: bevor in der auf HEVC beruhenden 3DVC eine Vorgänger-Vorhersageeinheit (PU) vorhergesagt wird, die einer Codierungseinheit (CU) eines Tiefenbilds entspricht, zu beurteilen, ob die Vorgänger-PU alle vorgegebenen Bedingungen erfüllt, und ein Beurteilungsergebnis an das Vorhersagemodul zu senden; und
das Vorhersagemodul (302) ausgestaltet ist, um: dann, wenn die Vorgänger-PU alle vorgegebenen Bedingungen erfüllt, nur interne Modi der hocheffizienten Videocodierung (HEVC) auszuwerten, wenn die Vorgänger-PU codiert wird, ansonsten die internen Modi der HEVC und Tiefenmodellierungsmodi- Vorhersagen (DMM-Vorhersagen) auszuwerten, wenn die Vorgänger-PU codiert wird; wobei die vorgegebenen Bedingungen wie folgt sind:
eine Blockgröße der Vorgänger-PU ist größer als ein erster Schwellenwert;
eine Differenz zwischen einem maximalen Pixelwert und einem minimalen Pixelwert der PU ist kleiner als ein zweiter Schwellenwert; und
alle speziellen Pixel der Vorgänger-PU sind identisch; wobei die speziellen Pixel auf die folgende Weise erhalten werden:
alle Zeilen und Spalten der Vorgänger-PU werden ausgewertet, wenn die Anzahl der Pixel, deren Pixelwerte gleich sind, in einer Zeile oder Spalte größer als ein dritter Schwellenwert ist, wird die Zeile oder Spalte als eine spezielle Zeile oder Spalte aufgezeichnet, die Pixelwerte, deren Anzahl der Pixel größer als der dritte Schwellenwert ist, werden als die speziellen Pixel aufgezeichnet, wobei der dritte Schwellenwert von einer Blockgröße der Vorgänger-PU abhängt.

4. Vorrichtung nach Anspruch 3, wobei das Vorhersagemodul ferner ausgestaltet ist, um: nachdem die internen Modi der HEVC ausgewertet sind oder nachdem die internen Modi der HEVC und die DMM-Vorhersagen ausgewertet sind, einen optimalen Vorhersagemodus der Vorgänger-PU zu beschaffen, optimale Kosten und einen Vorhersagemodus der Vorgänger-PU zu erhalten und die optimalen Kosten und den Vorhersagemodus der Vorgänger-PU als Kosten und Vorhersagemodus der CU zu verwenden.

## Revendications

1. Procédé de codage appliqué à un codage vidéo tridimensionnel basé sur un codage vidéo haute efficacité (3DVC basé sur HEVC), comprenant les étapes consistant à :
dans le 3DVC basé sur HEVC, avant prédiction d'une unité de prédiction parente (PU) correspondant à une unité de codage (CU) d'une image de profondeur (201), juger si la PU parente satisfait à toutes les conditions prédéfinies, si la PU parente satisfait à toutes les conditions prédéfinies, évaluer ensuite uniquement des modes intra de codage vidéo haute efficacité (HEVC) lors d'un codage de la PU parente, évaluer encore les modes intra de la HEVC et les modes de modélisation de profondeur (DMM) lors d'un codage la PU parente (205) ; dans lequel les conditions prédéfinies sont les suivantes :
une taille de bloc de la PU parente est supérieure à une première valeur de seuil (202) ;
une différence entre une valeur de pixel maximale et une valeur de pixel minimale de la PU parente est inférieure à une seconde valeur de seuil (203) ; et
tous les pixels spécifiques de la PU parente sont identiques (204) ; dans lequel les pixels spécifiques sont obtenus de la manière suivante :
toutes les lignes et colonnes de la PU parente sont évaluées, si le nombre de pixels dont les valeurs de pixel sont identiques est supérieur à une troisième valeur de seuil dans une ligne ou une colonne, la ligne ou la colonne est enregistrée en tant que ligne ou colonne spécifique, les valeurs de pixel avec le nombre de pixels supérieur à la troisième valeur de seuil sont enregistrées en tant que pixels spécifiques, dans lequel la troisième valeur de seuil dépend d'une taille de bloc de la PU parente.

2. Procédé selon la revendication 1, **caractérisé en ce que** le procédé comprend en outre : après évaluation des modes intra du HEVC, ou après évaluation des modes intra du HEVC et des prédictions des DMM, l'acquisition d'un mode de prédiction optimal de la PU parente, l'obtention d'un coût optimal et d'un mode de prédiction de la PU parente, et la prise en compte du coût optimal et du mode de prédiction de la PU parente en tant que coût et mode de prédiction de la CU (206).

3. Dispositif de codage appliqué à un codage vidéo tridimensionnel basé sur un codage vidéo haute efficacité (3DVC basé sur HEVC) comprenant : un module de jugement (301) et un module de prédiction (302), dans lequel :
le module de jugement (301) est configuré pour : dans le 3DVC basé sur HEVC, avant prédiction d'une unité de prédiction parente (PU) correspondant à une unité de codage (CU) d'une image de profondeur, juger si la PU parente satisfait toutes les conditions prédéfinies, et envoyer un résultat de jugement au module de prédiction ; et
le module de prédiction (302) est configuré pour : si la PU parente satisfait toutes les conditions prédéfinies, évaluer ensuite uniquement des modes intra de codage vidéo haute efficacité (HEVC) lors d'un codage de la PU parente, évaluer encore les modes intra du HEVC et les prédictions des modes de modélisation en profondeur (DMM) lors d'un codage de la PU parente ; dans lequel les conditions prédéfinies sont les suivantes :
une taille de bloc de la PU parente est supérieure à une première valeur de seuil ;
une différence entre une valeur de pixel maximale et une valeur de pixel minimale de la PU parente est inférieure à une seconde valeur de seuil ; et
tous les pixels spécifiques de la PU parente sont identiques ; dans lequel les pixels spécifiques sont obtenus de la manière suivante :
toutes les lignes et colonnes de la PU parente sont évaluées, si le nombre de pixels dont les valeurs de pixel sont identiques est supérieure à une troisième valeur de seuil dans une ligne ou une colonne, la ligne ou la colonne est enregistrée en tant que ligne ou colonne spécifique, les valeurs de pixel avec le nombre de pixels supérieur à la troisième valeur de seuil sont enregistrées en tant que pixels spécifiques, dans lequel la troisième valeur de seuil dépend d'une taille de bloc de la PU parente.

4. Dispositif selon la revendication 3, dans lequel le module de prédiction est en outre configuré pour : après évaluation des modes intra du HEVC, ou après évaluation des modes intra du HEVC et des prédictions des DMM, acquérir un mode de prédiction optimal de la PU parente, obtenir un coût optimal et un mode de prédiction de la PU parente, et prendre en compte le coût optimal et le mode de prédiction de la PU parente en tant que coût et mode de prédiction de la CU.
